# EUROPÄISCHE PATENTSCHRIFT

(11) **EP 0 762 616 B1**
(45) Veröffentlichungstag und Bekanntmachung des Hinweises auf die Patenterteilung: **27.10.1999**
(21) Anmeldenummer: 96112951.7
(22) Anmeldetag: 12.08.1996
(51) Int. Cl.: H02K 11/04, H02K 23/66, H02K 5/22

(54) **Kommutatormotor, insbesondere zum Antrieb eines Gebläses in einem Kraftfahrzeug**
Commutator motor, in particular for driving a fan of a motor vehicle
Moteur à collecteur, notamment pour l'entraînement d'un ventilateur d'un véhicule automobile

(30) Priorität: 24.08.1995 DE 29513633 U
(43) Veröffentlichungstag der Anmeldung: 12.03.1997
(73) Patentinhaber: SIEMENS AKTIENGESELLSCHAFT, 80333 München (DE)
(72) Erfinder: Gilly, Joachim, Dipl.-Ing. (FH), 97230 Estenfeld (DE); Heger, Siegfried, Dipl.-Ing. (FH), 97076 Würzburg (DE); Mohr, Volker, Dipl.-Ing. (FH), 97453 Forst (DE)

(56) Entgegenhaltungen:
- EP-A- 0 413 849
- EP-A- 0 645 875
- US-A- 3 356 873

## Beschreibung

Die Erfindung bezieht sich auf einen Kommutatormotor gemäß Anspruch 1.

Durch die EP-B2-0 182 145 ist ein Gebläse einer Heiz- und Klimaanlage in einem Kraftfahrzeug mit einem antreibenden Elektromotor bekannt, auf dessen Motorwelle ein Gebläserad befestigt ist; für derartige aus dem Gleichstrom-Bordnetz des Kraftfahrzeugs gespeiste Antriebsmotore sind üblicherweise Kommutatormotore vorgesehen.

Es ist bekannt, zur Leistungs- bzw. Drehzahländerung derartige Antriebsmotore mit einer gepulsten, insbesondere einer pulsweitenodulierten, Speisespannung zu versorgen. Die dazu notwendige Steuer- bzw. Regelelektronik ist üblicherweise in einem seperaten Elektronikgehäuse außerhalb des Kommutatormotors angeordnet und über extern verlegte Steuer- bzw. Speiseleitungen mit diesem verbunden.

Durch die DE-C3-35 131 155 ist ein Kommutatormotor mit einer im Abstand zum Stator und senkrecht zur Motorachsrichtung an der Innenseite des kommutatorseitigen Lagerschildes angeordnete Leiterplatte bekannt, die zum Betrieb des Elektromotors dienende Bauelemente trägt.

Durch die EP 0 645 875 Al ist ein Motor-Pumpen-Aggregat mit axial vor der einen Stirnseite eines Pumpengehäuses angeordnetem Kommutatormotor und axial vor der anderen Stirnseite des Pumpengehäuses angeordnetem Elektronikgehäuse mit einer Leiterplatte mit Pulsweitensteuerung bekannt; die Leiterplatte an dem einen axialen Ende dieser dreiteiligen Baueinheit ist mit der Bürstenplatte des Kommutatormotors an dem anderen axialen Ende der Baueinheit über eine Leitungseinheit verbunden, die innerhalb des Pumpengehäuses und des Motorgehäuses, speziell in Distanzstücken zwischen den tangentialen Stirnseiten von statorseitigen Erreger-Dauermagneten, verläuft.

Gemäß Aufgabe vorliegender Erfindung soll für einen, insbesondere statorseitig permanenterregten, Kommutatormotor mit durch eine gepulste, insbesondere pulsweitenmodulierte, Speisespannung versorgten Rotorwicklung auf montage- und fertigungstechnisch einfache Weise die sogenannte elektromagnetische Verträglichkeit (EMV) verbessert werden.

Die Lösung der vorgenannten Aufgabe gelingt durch die Lehre des Anspruchs 1; vorteilhafte Ausgestaltungen der Erfindung sind jeweils Gegenstand der Unteransprüche.

Die erfindungsgemäße Konstruktion erlaubt einerseits die montage- und fertigungstechnische Integration der Steuer- bzw. Regelelektronik für die gepulste Speisespannung der Rotorwicklung eines üblichen, insbesondere bereits vorhandenen Motors ohne wesentliche motorseitige Konstruktionsänderungen und andererseits die für eine verbesserte elektromagnetische Verträglichkeit vorteilhafte Abschirmung der Verbindungsleitungen zwischen der Steuer- bzw. Regelelektronik und dem Anschluß an die den Kommutator kontaktierenden Bürsten durch das umgebende metallene Motorgehäuse bei trotzdem gleichzeitig guter Kühlermöglichkeit der wärmeempfindlichen Bauelemente der Leiterplatte.

Die Verwendung einer an sich üblichen, bisher nicht für eine integrierte Steuer- bzw. Regelelektronik vorgesehenen Motorkonstruktion und eine die erfindungsgemäße Integration ermöglichende Anpassung durch lediglich geringfügige spezifische Ausgestaltung des AS-seitigen Lagerbügels bei gewährleisteter guter Kühlung der Bauelemente der Leiterplatte läßt sich nach einer Ausgestaltung der Erfindung dadurch erreichen, daß der AS-seitige Lagerbügel topfartig mit radial außen axial an eine stirnseitige Topfbodenwandung angeformten, mit ihren eine stirnseitige Topfbodenwandung angeformten, mit ihren freien Enden am Motorgehäuse befestigbaren stegartigen Topfmantelwandungen sowie mit einer radial innen axial an die Topfbodenwandung angeformten Lagerhülse ausgebildet und die Leiterplatte rotorseitig innen an der verbleibenden, im wesentlichen ringförmig ausgebildeten Topfbodenseite des AS-seitigen Lagerbügels gehaltert ist; dieser AS-seitige Lagerbügel besteht vorteilhafterweise aus Metall, insbesondere aus Aluminium-Druckguß, derart daß auf der Leiterplatte angeordnete wärmeempfindliche elektronische Bauteile bei gut wärmeleitender Verbindung zur Wandung des Lagerbügels effektiv gekühlt werden können. Die wärmeempfindlichen elektronischen Bauelemente sind dazu nach einer Ausgestaltung der Erfindung durch Andruckmittel, insbesondere eine Andruckfeder, an die Topfmantelwandung des Lagerbügels angedrückt; der Lagerbügel ist in vorteilhafter Weise zumindest in diesem Bereich mit zusätzlichen Kühlrippen versehen. Der Wärmeübergang von den wärmeempfindlichen elektronischen Bauelementen zu dem Lagerbügel und damit zu den Kühlrippen liegt vorzugsweise im Bereich von radial gegenüber dem Außenumfang der mantelseitigen Stege des Lagerbügels axialen Verstemmkanälen, durch welche die freien Enden der mantelseitigen Stege mit dem Motorgehäuse, an bereits bei früheren Konstruktionen vorgesehenen Befestigungsstellen, unverändert verstemmbar sind.

Die Erfindung sowie weitere vorteilhafte Ausgestaltungen der Erfindung gemäß Merkmalen der Unteransprüche sind anhand schematisch dargestellter Ausführungsbeispiele in der Zeichnung näher erläutert; darin zeigen:
- FIG 1: einen axialen Längsschnitt durch einen motorischen Lüfterantrieb für ein Kraftfahrzeug;
- FIG 2: die Anordnung gemäß FIG 1 im Schnittverlauf II-II;
- FIG 3: die Anordnung gemäß FIG 1 im Schnittverlauf III-III.

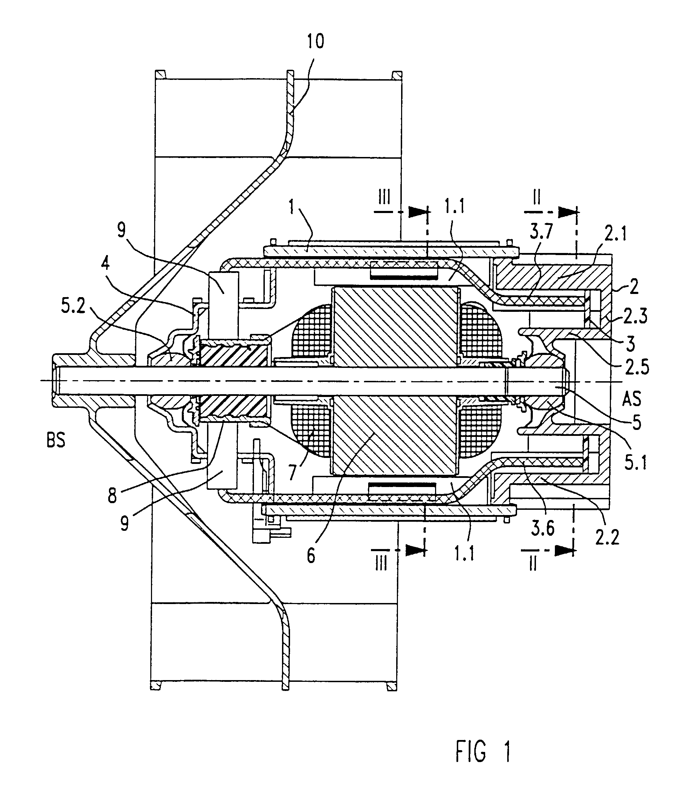

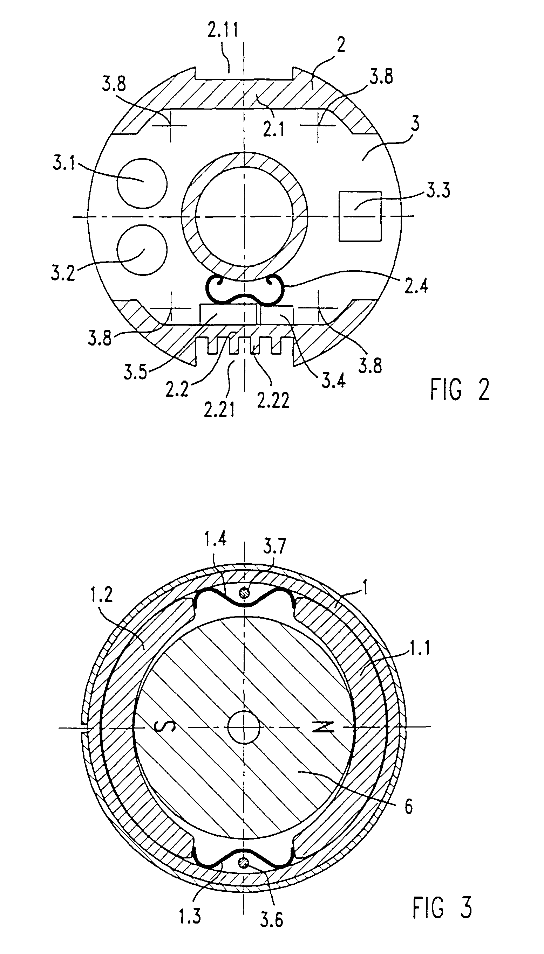

Gemäß FIG 1,3 sind am Innenumfang eines gleichzeitig als magnetischer Rückschlußteil dienenden metallenen Motorgehäuses 1 schalenförmige Erregermagnete 1.1 bzw.1.2 mit tangential an ihren Stirnseiten anliegenden Bügelfedern 1.3;1.4 gehaltert. An den beiden Stirnseiten des Motorgehäuses 1 ist rechts ein AS-seitiger Lagerbügel 2 bzw. links am kommutatornahen Ende ein BS-seitiger Lagerbügel 4 befestigt, insbesondere verstemmt. Die beiden Lagerbügel 2 bzw.4 nehmen Kalottenlager 5.1 bzw.5.2 auf, in denen eine Rotorwelle 5 drehbar gelagert ist. Auf dem aus dem linken BS-seitigen Kalottenlager 5.2 herausragenden freien Ende der Rotorwelle 5 ist ein doppelflutiges Radiallüfterrad 10 befestigt. Die Rotorwelle 5 trägt ein Rotorblechpaket 6, in das eine Rotorwicklung 7 eingewickelt und mit Lamellenanschlüssen eines ebenfalls auf der Rotorwelle 5 befestigten Kommutators 8 verbunden ist; die Lamellen des Kommutators 8 werden von Bürsten 9;9 kontaktiert.

Zur Versorgung der Rotorwicklung 7 mit einer gepulsten, insbesondere pulsweitenmodulierten, Speisespannung dient erfindungsgemäß eine auf einer an dem AS-seitigen Lagerbügel 5.1 motorinnenseitig z.B. in Befestigungspunkten 3.8 befestigten Leiterplatte 3 angeordnete Steuer- bzw. Regelelektronik, die z.B. elektronische Bauelemente 3.1-3.5 enthält und über im Motorinneren verlegte Verbindungsleitungen 3.6 bzw.3.7 an die Bürsten 9 angeschlossen ist.

Zur erfindungsgemäßen Aufnahme der Leiterplatte 3 an der Innenseite des AS-seitigen Lagerbügels ist unter Beibehaltung einer ansonsten unveränderten Motorkonstruktion lediglich der AS-seitige Lagerbügel 2 spezifisch angepaßt jedoch in üblicher Weise weiterhin an der rechten AS-Stirnseite des Motorgehäuses 1 dadurch verstemmbar, daß der AS-seitige Lagerbügel topfartig radial außen mit axial an eine stirnseitige Topfboden-Wandung 2.3 angeformten, mit ihren freien Enden am Motorgehäuse 1 befestigbaren stegartigen Topfmantel-Wandungen 2.1 bzw.2.2 und mit radial derart zurückgesetzten Verstemmkanälen 2.11 bzw.2.21 ausgebildet ist, daß die freien Enden der stegartigen Topfmantel-Wandungen 2.1;2.2 axial zugänglich und mit dem Motorgehäuse 1 verbindbar, insbesondere durch axiales Ansetzen eines entsprechenden Werkzeuges verstemmbar sind. Zur Aufnahme des Rotors dient nach einer Ausgestaltung der Erfindung eine am AS-seitigen Lagerbügel 2 radial innen angeformte axial vorstehende Lagerhülse 2.5 zur Aufnahme des Kalottenlagers 5.1.

Insbesondere die wärmeempfindlichen elektronischen Bauteile 3.4 bzw.3.5 der elektronischen Steuer- bzw. Regelschaltung sind in gut wärmeleitender Verbindung zur stegartigen Topfmantel-Wandung 2.2 des, vorzugsweise aus Metall insbesondere Aluminiumdruckguß, gefertigten AS-seitigen Lagerbügels 2 gehaltert.

Als im Sinne einer guten Wärmeleitung vorteilhafte Halterung sind die wärmeempfindlichen elektronischen Bauteilelemente 3.4 bzw.3.5 durch eine Andruckfeder 2.4 an die Wandung, insbesondere die eine stegartige Topfmantel-Wandung 2.2 des AS-seitigen Lagerbügels 2, angedrückt.

Zur weiteren Verbesserung der Wärmeabfuhr ist nach einer Ausgestaltung der Erfindung vorgesehen, die eine stegartige Topfmantel-Wandung 2.2, an der radial innen die wärmeempfindlichen elektronischen Bauteile 3.4 bzw.3.5 anliegen, radial außen mit Kühlrippen 2.22 zu versehen, wobei zur gleichzeitigen Gewährleistung einer geringen Baugröße vorteilhafterweise die Kühlrippen 2.22 im Bereich der radial gegenüber dem Außenumfang der stegartigen Topfmantel-Wandungen 2.1 bzw.2.2 des AS-seitigen Lagerbügels 2 zurückversetzten Verstemmkanäle 2.11 bzw.2.21 vorgesehen sind.

Die Verbindungsleitungen 3.6 bzw.3.7 zwischen der im AS-seitigen Lagerbügel 2 gehalterten Leiterplatte 3 einerseits und den Anschlüssen der Bürsten 9;9 am BS-seitigen Ende des Motorgehäuses 1 verlaufen - wie insbesondere aus FIG 3 ersichtlich - platzsparend in den tangentialen Zwischenräumen zwischen den Stirnseiten der Erregermagnete 1.1 bzw.1.2 und sind durch die Bügelfedern 1.3 bzw.1.4, die zur gegenseitigen tangentialen Verspannung der Erregermagnete bzw. zu deren radialen Andruck an den Innenumfang des Motorgehäuses 1 dienen, gleichzeitig lagefixiert.

## Patentansprüche

1. Kommutatormotor, insbesondere zum Antrieb eines Gebläses in einem Kraftfahrzeug, mit folgenden Merkmalen:
a) Den Kommutator kontaktierende Bürsten (9:9) sind BS-seitig am Stator, insbesondere an dessen BS-seitigem Lagerbügel (4), gehalten;
b) die den Kommutator (8) kontaktierenden Bürsten (9;9) sind über zumindest eine Verbindungsleitung (3.6;3.7) aus einer einen Pulswechselrichter enthaltenen elektronischen Schaltung (3.1-3.5) mit einer gepulsten, insbesondere pulsweitenmodulierten, Spannung speisbar;
c) die elektronische Schaltung (3.1-3.5) ist auf einer Leiterplatte (3) angeordnet, die AS-seitig am Stator innerhalb dessen topfartigen AS-seitigen Lagerbügels (2) mit gut wärmeleitender Verbindung von wärmeempfindlichen elektronischen Bauteilen (3.4;3.5) zur Wandung des Lagerbügels (2) gehaltert ist;
d) die Verbindungsleitungen (3.6;3.7) verlaufen zwischen der AS-seitigen Leiterplatte (3) einerseits und ihrer BS-seitigen Verbindung mit den Bürsten (9;9) andererseits radial innerhalb des statorseitigen magnetischen Rückschlußteils, insbesondere des Motorgehäuses (1), des Kommutatormotors.

2. Kommutatormotor nach Anspruch 1 mit dem Merkmal:
e) Der AS-seitige Lagerbügel (2) ist topfartig mit radial außen axial an eine stirnseitige Topfboden-Wandung (2.3) angeformten, mit ihren freien Enden am Motorgehäuse (1) befestigten stegartigen Topfmantel-Wandungen (2.1;2.2) bzw. mit einer radial innen axial an die Topfboden-Wandung (2.3) angeformten Lagerhülse (2.5) ausgebildet;
f) die Leiterplatte (3) ist an der motorseitigen inneren Topfbodenseite des AS-seitigen Lagerbügels (2) gehaltert.

3. Kommutatormotor nach Anspruch 1 und/oder 2 mit dem Merkmal:
g) Der AS-seitige Lagerbügel (2) besteht aus Metall, insbesondere aus Aluminium-Druckguß.

4. Kommutatormotor nach Anspruch 2 und/oder 3 mit dem Merkmal:
h) Auf der Leiterplatte (3) angeordnete wärmeempfindliche elektronische Bauteile (3.4;3.5) sind in gutwärmeleitender Verbindung zu zumindest einer der stegartigen Topfmantel-Wandung (2.2;2.3) des topfartig geformten AS-seitigen Lagerbügels (2) gehaltert.

5. Kommutatormotor nach Anspruch 4 mit dem Merkmal:
i) Die wärmeempfindlichen elektronischen Bauelemente (3.4;3.5) sind durch eine Andruckfeder (2.4) an die Wandung, insbesondere an zumindest einer der stegartigen Topfmantel-Wandung (2.2), des topfartig geformten AS-seitigen Lagerbügels (2) angedrückt.

6. Kommutatormotor nach Anspruch 4 und/oder 5 mit dem Merkmal:
j) Die stegartige Topfmantel-Wandung (2.1), an der radial innen die wärmeempfindlichen elektronischen Bauteile (3.4;3.5) anliegen, ist radial außen mit Kühlrippen (2.22) versehen.

7. Kommutatormotor nach Anspruch 6 mit dem Merkmal:
k) Die Kühlrippen (2.22) sind im Bereich von radial gegenüber dem Außenumfang der stegartigen Topfmantel-Wandungen (2.1;2.2) des AS-seitigen Lagerbügels (2) zurückgesetzten Verstemmkanälen (2.11;2.21) vorgesehen, durch welche die freien Enden der stegartigen Topfmantel-Wandungen (2.1;2.2) mit dem Motorgehäuse (1) verbindbar, insbesondere verstemmbar, sind.

8. Kommutatormotor nach zumindest einem der vorhergehenden Ansprüche mit dem Merkmal:
l) Die Verbindungsleitungen (3.6;3.7) verlaufen radial innerhalb des Motorgehäuses (1) in den tangentialen Zwischenräumen zwischen den Stirnseiten von für die Erregung des Kommutatormotors am Innenumfang des Motorgehäuses (1) vorgesehenen Erregermagneten (1.1;1.2).

9. Kommutatormotor nach Anspruch 8 mit dem Merkmal:
m) Die Verbindungsleitungen (3.6;3.7) sind radial gesichert durch übergreifende Bügelfedern (1.3;1.4), die zur gegenseitigen tangentialen Verspannung der Erregermagnete (1.1;1.2) bzw. zu deren radialem Andruck an das Motorgehäuse (1) vorgesehen sind.

## Claims

1. Commutator motor, in particular for driving a fan in amotor vehicle, having the following features:
a) brushes (9:9) contacting the commutator are supported on the non-drive end of the stator, in particular on its non-drive-end bearing bracket (4);
b) the brushes (9;9) contacting the commutator (8) can be supplied with a pulsed, in particular pulse-width-modulated voltage by way of at least one connecting line (3.6;3.7) from an electronic circuit (3.1-3.5) containing a pulse-controlled inverter;
c) the electronic circuit (3.1-3.5) is arranged on a printed board (3) which is supported on the drive end of the stator within its pot-like drive-end bearing bracket (2) with a connection of heat-sensitive electronic components (3.4;3.5) to the wall of the bearing bracket (2), the connection conducting heat well;
d) the connecting lines (3.6;3.7) extend between the drive-end printed board (3) on one side and its non-drive-end connection with the brushes (9;9) on the other side radially within the stator-side magnetic return path part, in particular the motor housing (1), of the commutator motor.

2. Commutator motor according to claim 1, having the feature:
e) the drive-end bearing bracket (2) is constructed like a pot with bar-like pot casing walls (2.1;2.2), integrally moulded radially on the outside axially to a front pot base wall (2.3) and secured by their free ends to the motor housing (1), or with a bearing sleeve (2.5) integrally moulded radially on the inside axially to the pot base wall (2.3);
f) the printed board (3) is supported on the motorside inner pot base side of the drive-end bearing bracket (2).

3. Commutator motor according to claim 1 and/or 2, having the feature:
g) the drive-end bearing bracket (2) consists of metal, in particular diecast aluminium.

4. Commutator motor according to claim 2 and/or 3, having the feature:
h) heat-sensitive electronic components (3.4;3.5) arranged on the printed board (3) are supported with a connection, which conducts heat well, with at least one of the bar-like pot casing walls (2.2;2.3) of the drive-end bearing bracket (2) which is formed like a pot.

5. Commutator motor according to claim 4, having the feature:
i) the heat-sensitive electronic components (3.4;3.5) are pressed by a pressure spring (2.4) against the wall, in particular against at least one of the bar-like pot casing walls (2.2) of the drive-end bearing bracket (2) which is formed like a pot.

6. Commutator motor according to claim 4 and/or 5, having the feature:
j) the bar-like pot casing wall (2.1), which the heat-sensitive electronic components (3.4;3.5) abut radially on the inside, is provided with cooling ribs (2.22) radially on the outside.

7. Commutator motor according to claim 6, having the feature:
k) the cooling ribs (2.22) are provided in the region of caulking channels (2.11;2.21) set back radially in relation to the outer circumference of the bar-like pot casing walls (2.1;2.2) of the drive-end bearing bracket (2), by means of which caulking channels the free ends of the bar-like pot casing walls (2.1;2.2) can be connected, in particular caulked, to the motor housing (1).

8. Commutator motor according to at least one of the preceding claims, having the feature:
l) the connecting lines (3.6;3.7) extend radially within the motor housing (1) in the tangential intermediate spaces between the front sides of exciting magnets (1.1;1.2) provided on the inner circumference of the motor housing (1) for the excitation of the commutator motor.

9. Commutator motor according to claim 8, having the feature:
m) the connecting lines (3.6;3.7) are radially secured by overreaching bracket springs (1.3;1.4) which are provided for the mutual tangential bracing of the exciting magnets (1.1;1.2) or for their radial pressing against the motor housing (1).

## Revendications

1. Moteur à collecteur, notamment pour l'entraînement d'un ventilateur dans un véhicule automobile, présentant les caractéristiques suivantes :
a) des balais (9; 9) contactant le collecteur sont supportés, côté système fonctionnel (BS), par le stator, notamment par la bride de palier (4), côté système fonctionnel (BS);
b) les balais (9; 9) contactant le collecteur (8) peuvent être alimentés, par l'intermédiaire d'au moins une ligne de connexion (3.6; 3.7), à partir d'un circuit électronique (3.1 - 3.5) renfermant un onduleur pulsé, avec une tension pulsée, notamment une tension à modulation de largeur d'impulsion;
c) le circuit électronique (3.1 - 3.5) est disposé sur une plaque de circuit imprimé (3), qui est supportée, côté entraînement (AS) du stator, à l'intérieur de sa bride de palier (2) en forme de pot, côté entraînement (AS), avec une liaison assurant un bon transfert de la chaleur de composants électroniques (3.4; 3.5) sensibles à la chaleur, vers la paroi de la bride de palier (2);
d) les lignes de connexion (3.6; 3.7) s'étendent entre la plaque de circuit imprimé (3), côté entraînement (AS), d'une part, et leur connexion, côté système fonctionnel (BS), avec les balais (9; 9) d'autre part, radialement à l'intérieur de la pièce de retour magnétique, notamment le carter (1) de moteur, du moteur à collecteur.

2. Moteur à collecteur selon la revendication 1, présentant la caractéristique suivante :
e) la bride de palier (2), côté entraînement (AS), est réalisée à la manière d'un élément en forme de pot, comprenant des parois de périphérie de pot (2.1; 2.2) en forme de nervure, formées par moulage radialement à l'extérieur et axialement sur une paroi de fond de pot (2.3) frontale, et fixées par leurs extrémités libres au carter de moteur (1), la bride de palier comportant également une douille de palier (2.5) formée par moulage, axialement à la paroi de fond de pot (2.3), radialement à l'intérieur de celle-ci;
f) la plaque de circuit imprimé (3) est supportée sur le côté intérieur de la paroi de fond de pot, côté moteur, de la bride de palier (2), côté entraînement (AS).

3. Moteur à collecteur selon la revendication 1 et/ou 2, présentant la caractéristique suivante:
g) la bride de palier (2), côté entraînement (AS), est réalisée en métal, notamment en aluminium coulé sous pression.

4. Moteur à collecteur selon la revendication 2 et/ou 3, présentant la caractéristique suivante :
h) des composants électroniques (3.4; 3.5) sensibles à la chaleur, disposés sur la plaque de circuit imprimé, sont supportés avec une liaison assurant un bon transfert de la chaleur vers l'une au moins des parois de périphérie de pot (2.1; 2.2) en forme de nervure de la bride de palier (2), côté entraînement (AS), en forme de pot.

5. Moteur à collecteur selon la revendication 4, présentant la caractéristique suivante :
i) les composants électroniques (3.4; 3.5) sensibles à la chaleur sont appliqués par un ressort d'application (2.4) contre la paroi, notamment contre l'une au moins des parois de périphérie de pot (2.2) en forme de nervure de la bride de palier (2), côté entraînement (AS), en forme de pot.

6. Moteur à collecteur selon la revendication 4 et/ou 5, présentant la caractéristique suivante :
j) la paroi de périphérie de pot (2.2) en forme de nervure contre laquelle s'appuient radialement à l'intérieur, les composants électroniques (3.4; 3.5) sensibles à la chaleur, est pourvue radialement à l'extérieur, d'ailettes de refroidissement (2.22).

7. Moteur à collecteur selon la revendication 6, présentant la caractéristique suivante:
k) les ailettes de refroidissement (2.22) sont prévues dans la zone de canaux de sertissage (2.1; 2.21) en retrait radial par rapport à la périphérie extérieure des parois de périphérie de pot (2.1; 2.2) en forme de nervure de la bride de palier (2), côté entraînement (AS), canaux de sertissage par l'intermédiaire desquels les extrémités libres des parois de périphérie de pot (2.1; 2.2) en forme de nervure peuvent être assemblées, notamment serties, au carter (1) de moteur.

8. Moteur à collecteur selon l'une au moins des revendications précédentes, présentant la caractéristique suivante:
I) les lignes de connexion (3.6; 3.7) s'étendent radialement à l'intérieur du carter (1) de moteur, dans les espaces intermédiaires tangentiels entre les côtés frontaux d'aimants d'excitation (1.1; 1.2) prévus à la périphérie intérieure du carter (1) de moteur, pour l'excitation du moteur à collecteur.

9. Moteur à collecteur selon la revendication 8, présentant la caractéristique suivante:
m) les lignes de connexion (3.7; 3.8) sont arrêtées radialement par l'intermédiaire de ressorts en étrier (1.3; 1.4), qui sont prévus pour le serrage tangentiel réciproque des aimants d'excitation (1.1; 1.2) et à leur application radiale contre le carter (1) de moteur.
